Europäisches Patentamt

European Patent Office

Office européen des brevets

(11) Publication number: **0 299 611**
**A1**

# (12) EUROPEAN PATENT APPLICATION

(21) Application number: 88305123.7

(51) Int. Cl.⁴: **B29C 43/36**

(22) Date of filing: 06.06.88

(30) Priority: 05.06.87 JP 141807/87

(43) Date of publication of application:
18.01.89 Bulletin 89/03

(84) Designated Contracting States:
DE FR GB IT

(71) Applicant: **Takeda Chemical Industries, Ltd.**
**27, Doshomachi 2-chome Higashi-ku**
**Osaka-shi Osaka, 541(JP)**

(72) Inventor: **Nishino, Kenichi**
**13-67, Shimohozumi 3-chome**
**Ibaraki Osaka 567(JP)**
Inventor: **Nakagawa, Nobuyuki**
**1-20, Higashitokiwadai 6-chome Toyono-cho**
**Toyono-gun Osaka 563-01(JP)**
Inventor: **Maekawa, Hiroshi**
**23-12, Sohya 2-chome Hirakata**
**Osaka 573-01(JP)**

(74) Representative: **Laredo, Jack Joseph et al**
**Elkington and Fife High Holborn House 52/54**
**High Holborn**
**London, WC1V 6SH(GB)**

(54) Compression molding apparatus and method.

(57) An apparatus for and a method of compression-molding a plastic material so that the material can be molded without being accompanied by flashes. The apparatus basically consists of a pair of two dies (1, 2) complementary to each other; one (1) is stationary and the other (2) is made movable so as to be capable of engaging with the stationary one (1). The apparatus have substantially no clearance at the pinch-off portion formed by the engaging edge portions of the two dies (1, 2), and at least one (4 or 41) of the engaging portions is made of a plastic material. In one embodiment of the invention both the engaging edges (42, 43) are made of a plastic material.

FIG.1

## Compression Molding Apparatus and Method

### Background of the Invention

The present invention relates to apparatus for and method of compression-molding a plastic substrate, and more particularly to apparatus for and method of compression-molding a sheet molding compound (hereinafter referred to as SMC).

SMC molded pieces have a beautiful appearance and are excellent in water resistance & chemical resistance and mechanical strength. In addition, the SMC molded pieces are highly productive. Recent years, the SMC molded pieces have been applied to automotive parts such as aero-parts, trunk lids, hoods and the like, as well as bath tubs, water tank panels, etc. For the applications above-mentioned, the SMC is mostly compression-molded.

### Prior Art

A mold generally includes a stationary die and a movable die, each die having an edge. These dies are made of steel, and a clearance of 0.01 to 0.10 mm is formed at the pinch-off portion. After a predetermined amount of an SMC has been supplied, the SMC is compression-molded under a pressure of 30 to 150 kgf/cm$^2$ at 120 to 180°C. At this time, the SMC partially flows out through the clearance at the pinch-off portion to the outside of the dies, thus forming flashes. The flashes which are unnecessary for molded pieces, are removed by suitable means after compression molding. Such flash removal takes labor and time, lowering the productivity. When the molded pieces are to be taken out from the mold with the flashes remaining as sticking to the pinch-off portion, in particular when the molded pieces are thin at the end portions thereof, the molded pieces are pulled by the flashes which still stick to the dies. This causes the end portions of the molded pieces to be damaged, resulting in defective molding. This lowers the productivity.

Molded pieces to be applied for automotive parts are mostly painted. Pinholes, porosities and the like in the molded pieces are exposed at those portions of the molded pieces from which flashes have been removed. This produces pinholes, craters and the like on the coated films, causing the appearance of the molded pieces to be considerably injured.

To prevent flashes from being produced, it is proposed to make small the clearance at the pinch-off portion. If the clearance is made small in a steel die having an edge, both edges forming the pinch-off portion interfere with each other. This involves the likelihood that the edges are partially damaged. Thus, the clearance cannot be made so small as to prevent flashes from being produced.

### Objects of the Invention

It is an object of the present invention to provide a compression molding apparatus having substantially no clearance at the pinch-off portion formed by both stationary and movable dies.

It is another object of the present invention to provide a compression molding apparatus for making molded pieces with no flashes remaining at the edges thereof.

### Disclosure of the Invention

The compression molding apparatus in accordance with the present invention includes a first die provided at the outer periphery thereof with a first edge, and a second die provided at the outer periphery thereof with a second edge, the first and second edges being adapted to be engaged with each other to form a pinch-off portion, the first and second dies forming a pair of complementary dies, and is characterized in that at least one of the first and second edges is made of a plastic material.

The compression molding method in accordance with the present invention is characterized in that a sheet molding compound is compression-molded with the use of the compression molding apparatus having the first and second dies above-mentioned.

The die edge herein referred to includes the ridgeline and the lateral side of a die which comes in contact with the other die.

In the compression molding apparatus of the present invention, a plastic material is used for at least one of the edges forming the pinch-off portion. Such plastic material includes thermosetting resin and thermoplastic resin having sufficient strength at a molding tempera ture under a molding pressure, or having resistance to high temperatures of 140°C to 150°C or more. The thermosetting resin includes Bakelite, epoxy resin, phenolic resin, melamine resin, polyurethane resin, thermosetting polyester amide (CP resin) and the like. The thermoplastic resin includes polytetrafluoroethylene, polytrifluoroethylene and the like. Preferable is thermosetting resin having a flexural modulus of 50 kgf/mm$^2$ at 140° C. More preferable are epoxy resin and thermosetting polyester amide (CP resin manufactured by Takeda Chemical Industries Ltd.).

Fillers or reinforcing fibers may be added to the plastic material to improve the hardness and strength of the edges, or Teflon powder may be added to the plastic material to improve the lubricating property of the edges. To decrease the stickiness of flashes, silicone resin or Teflon resin may be used for coating the edges, or the edge surfaces may be plated by metal.

If the steel edge and the plastic edge interfere with each other, the plastic edge is scraped off. This does not produce dragging which would be produced if both edges are made of steel. As the result, the clear ance at the pinch-off portion is made so small as to prevent flashes from being produced. The plastic material is superior in resiliency to metal and has a greater Poisson's ratio. Accordingly, when the pressure in the mold is increased, the plastic material is deformed to close the small clearance. This causes the clearance to be completely made zero, which is the important characteristic of the present invention.

If the plastic edge is worn in use to increase the clearance at the pinch-off portion, the plastic edge may be immediately replaced with a new one such that the clearance is sufficiently reduced.

## Brief Description of the Drawings

Figure 1 is a vertical section view of a compression molding apparatus in accordance with a first embodiment of the present invention, illustrating the state before an SMC is compressed;

Figure 2 is a vertical section view of the apparatus in Figure I, illustrating the state where SMC compression is completed;

Figure 3 is a vertical section view of a compression molding apparatus in accordance with a second embodiment of the present invention, illustrating the state where SMC compression is completed;

Figure 4 is a vertical section view of a compression molding apparatus in accordance with a third embodiment of the present invention, illustrating the state where SMC compression is completed; and

Figure 5 is an enlarged section view of another example of a plastic edge member 4.

## Detailed Description of the Preferred Embodiments

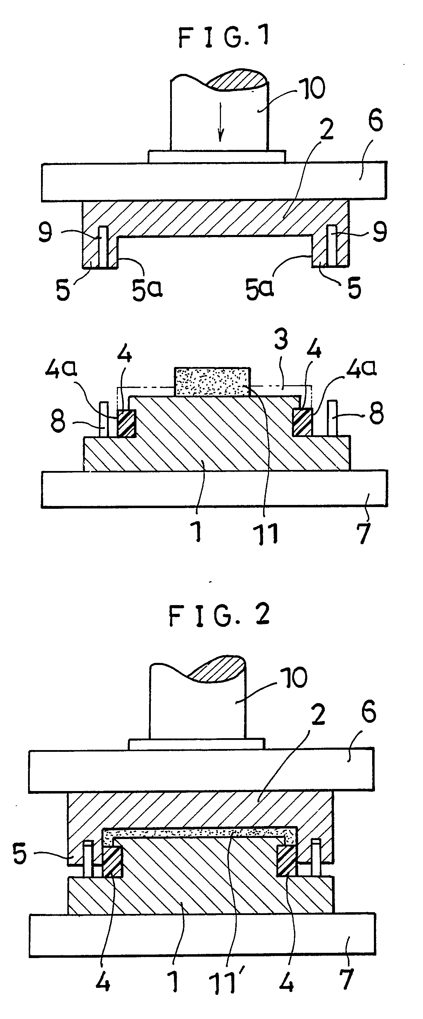

The following description will discuss the compression molding apparatus in accordance with a first embodiment of the present invention with reference to Fig.1.

The compression molding apparatus includes a stationary die 1 and a movable die 2 which form a pair of complementary dies. When the movable die 2 is lowered to provide a compression molding state, a mold cavity 3 of a predetermined shape is formed as shown by an alternate long and two short dashes line. The stationary die 1 is provided in the vicinity of the mold cavity 3 with a plastic edge member 4. The outer surface and the ridgeline of the upper end of this edge member 4 form a sta tionary edge 4a. The movable die 2 is provided in the vicinity of the mold cavity 3 with a projection 5. The inner surface and the ridgeline of the lower end of the projection 5 form a movable edge 5a. The stationary edge 4a and the movable edge 5a jointly form a pinch-off portion.

The stationary die 1 is attached to a press bottom platen 7, while the movable die 2 is attached to a press top platen 6 which is driven by a press ram 10. The stationary die 1 is provided at the outer periphery thereof with guide pins 8, while the movable die 2 is provided in the outer periphery thereof with guide pin holes 9. These guide pins 8 and guide pin holes 9 are adapted to be engaged with each other for positioning both dies 1 and 2.

To make the edge member 4, a plastic material is generally molded in a predetermined shape, for example in the form of a square pillar, and the molded part is cut as necessary, which is then secured to the die 1 at the outer periphery thereof. In view of the strength, the edge member generally has a thickness of about 1 to 10 cm (when the edge member is in the form of a square pillar, the pillar has a length of about 1 to 10 cm and a width of about 1 to 10 cm).

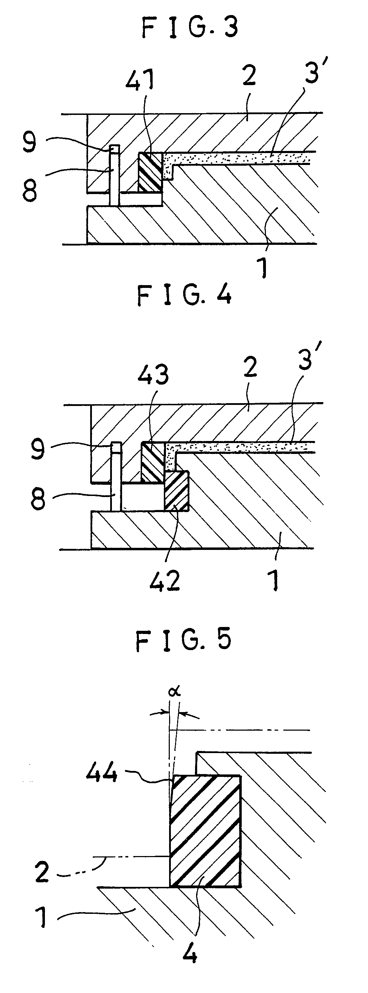

As shown in Fig. 5, the plastic edge member 4 may have a surface 44 inclined at an angle α from the ridgeline of the plastic edge member 4 to the lateral side thereof. According to the tests conducted by the inventors, no flashes were produced with the inclination angle α in a range from 1.5° to 2°.

The plastic edge member 4 may be attached to the die body by mechanical means such as screws, bolts and the like, or by adhesives. Alternatively, the die body may have such plastic edge member by direct casting, painting, compressing molding, injection molding or the like which may be applied directly to the die.

When an SMC or the like is molded with the use of the apparatus of the present invention, there are instances where air is accumulated in molded pieces of a complicated shape because no flashes are produced. In such case. there may be jointly used a so-called vacuum assisted compression molding method by which an SMC is compressed after the mold cavity has been evacuated.

Fig. 3 shows the compression molding apparatus in accordance with a second embodiment of the present invention. In this embodiment, a plastic edge member 41 is attached to a movable die 2, while the edge member of a stationary die 1 is made of the same material as that of the die 1.

Fig. 4 shows the compression molding apparatus in accordance with a third embodiment of the present invention. In this embodiment, a plastic edge member 42 is attached to a stationary die l, and a plastic edge member 43 is also attached to a movable die 2. Plastic materials having different hardnesses or resiliencies may be used for the plastic edge members 42 and 43, respectively.

The following description will discuss the compression molding method in accordance with the present invention.

As shown in Fig. l, an SMC 11 of which weight has been measured. is placed on the stationary die l, and the movable die 2 is lowered. As shown in Fig. 2, the mold cavity 3 is filled with the SMC. The dies 1 and 2 are previously heated to predetermined temperatures. When the molding pressure by the ram 10 reaches a pre determined value, the ram 10 stops lowering and such pressure of the predetermind value is held for a predetermined period of time, during which a chemical reaction proceeds in the SMC. Afterwards, the ram 10 is lifted up to obtain a predetermined molded piece 11′.

The following description will discuss examples of the compression molding in accordance with the present invention.

### Example 1

With the use of an SMC for automotive exterior body panels, compression molding was made under the following conditions:
　　Molded piece dimensions: 300 x 300 x 2.5 mm
　　Molded piece weight: 440 grs.
　　　Stationary die edge material: Thermosetting polyester amide (CP resin)
　　Mold temperature: 145°C
　　Closing speed : 2 mm/second
　　Molding pressure: 100 kgf/cm$^2$
　　Pressure holding time: 120 seconds
　　Molded pieces free from flashes were obtained.

### Example 2

With the use of a pigmented SMC, a parabolic antenna dish of a diameter of 40 cm was molded under the following conditions:
　　Molded piece dimensions: Diameter 40 cm x Average thickness of 3.5 mm
　　Molded piece weight: 1.050 grs.
　　　Stationary die edge material: Thermosetting polyester amide (CP resin)
　　Upper and lower die temperatures:150°C and 142°C, respectively
　　Closing speed : 1.0 mm/second
　　Molding pressure: 80 kgf/cm$^2$
　　Pressure holding time: 150 seconds
　　Molded pieces free from flashes were obtained.

### Claims

1. In a compression molding apparatus including a first die provided at the outer periphery thereof with a first edge, and a second die provided at the outer periphery thereof with a second edge, said first and second edges being adapted to be engaged with each other for forming a pinch-off portion, said first and second dies forming a pair of complementary dies,
   said compression molding apparatus characterized in that at least one of said first and second edges is made of a plastic material.

2. A method of compression-molding a sheet molding compound with the use of the compression molding apparatus having the first and second dies as set forth in Claim 1.

FIG. 1

FIG. 2

# FIG. 3

# FIG. 4

# FIG. 5

| | DOCUMENTS CONSIDERED TO BE RELEVANT | | EP 88305123.7 |
|---|---|---|---|

| Category | Citation of document with indication, where appropriate, of relevant passages | Relevant to claim | CLASSIFICATION OF THE APPLICATION (Int. Cl.4) |
|---|---|---|---|
| Y | US - A - 3 809 739 (GELIN)<br>* Fig. 3 *<br>-- | 1,2 | B 29 C 43/36 |
| Y | US - A - 3 235 643 (HOFER)<br>* Column 3, lines 4-40;<br>fig. 3,6 *<br>-- | 1,2 | |
| A | US - A - 3 958 910 (WILDE)<br>* Column 5, lines 65-68;<br>column 6, lines 1-10 *<br>---- | 1,2 | |

| TECHNICAL FIELDS SEARCHED (Int. Cl.4) |
|---|
| B 29 C |

The present search report has been drawn up for all claims

| Place of search | Date of completion of the search | Examiner |
|---|---|---|
| VIENNA | 08-11-1988 | REININGER |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO Form 1503 03.82